# FASCICULE DE BREVET EUROPEEN

(11) **EP 4 098 237 B1**
(45) Date de publication et mention de la délivrance du brevet: **28.02.2024**
(21) Numéro de dépôt: 22171674.9
(22) Date de dépôt: 04.05.2022
(51) Int. Cl.: A61H 23/02, B64D 11/06, B60N 2/90

(54) **TRANSDUCTEUR ÉLECTROMAGNÉTIQUE POUR TRANSMETTRE UN STIMULUS VIBRATOIRE À UN UTILISATEUR ET UN SYSTÈME DE STIMULATION COMPRENANT UN TEL TRANSDUCTEUR**
ELEKTROMAGNETISCHER TRANSDUCER ZUM ÜBERTRAGEN EINES VIBRATIONSREIZES AN EINEN BENUTZER UND STIMULATIONSSYSTEM MIT EINEM SOLCHEN TRANSDUCER
ELECTROMAGNETIC TRANSDUCER FOR TRANSMITTING A VIBRATORY STIMULUS TO A USER AND A STIMULATION SYSTEM COMPRISING SUCH A TRANSDUCER

(30) Priorité: 31.05.2021 FR 2105702
(43) Date de publication de la demande: 07.12.2022
(73) Titulaire: Pga Electronic, 36130 Montierchaume (FR)
(72) Inventeur: PALACIO, Bruno, 38130 MONTIERCHAUME (FR)
(74) Mandataire: Brevalex

(56) Documents cités:
- EP-A1- 0 553 525
- WO-A1-2015/161038
- FR-A1- 2 627 693
- JP-A- 2011 062 449
- US-A- 4 354 067

## Description

### Domaine technique

L'invention concerne le domaine des systèmes de stimulation destinés à la transmission de stimuli vibratoires à des utilisateurs, tels que par exemple des fauteuils massant et/ou de multimédia.

L'invention a plus précisément pour objet un transducteur électromagnétique, un système de stimulation comprenant un tel transducteur électromagnétique, et un véhicule intégrant un tel système de stimulation.

### État de l'art antérieur

Il est connu d'équiper des systèmes de stimulation tactile/vibratoire, tels que des fauteuils massant et/ou de multimédia, par des transducteurs électromagnétiques afin de transmettre aux utilisateurs desdits systèmes de stimulation des stimuli vibratoires contribuant à un acte de massage ou à des transmissions sensitives en lien avec un media consommé par l'utilisateur ou informatif.

Par stimulus vibratoire, on entend ici et dans le reste de cette demande la transmission d'un mouvement/vibration à l'utilisateur, ce mouvement/vibration présentant préférentiellement une fréquence dans l'infrason et/ou les basses fréquences dites profondes. Ainsi un tel stimulus vibratoire peut avoir une fréquence comprise entre 1 Hz et 100 Hz, voire entre 5 Hz et 50 Hz.

Ces transducteurs électromagnétiques comprennent généralement un boîtier dans lequel est montée une masselotte, montée mobile en translation dans ledit boîtier, et un système d'électro-aimant pour déplacer la masselotte. Néanmoins, compte tenu de la masse relativement importante d'une telle masselotte, le courant nécessaire pour la déplacer est relativement important et l'électro-aimant est sujet à un échauffement important qui peut être gênant pour l'utilisateur.

Ce problème est en partie résolu, comme cela est notamment montré dans le document US 4354067, par un couplage thermique de la bobine de l'électro-aimant avec le boîtier et en prévoyant un boîtier au moins en partie dans un matériau conducteur thermique. De cette manière, l'énergie thermique générée lors de l'alimentation en courant de l'électro-aimant peut être au moins en partie dissipée par le boîtier en matériau conducteur thermique.

Néanmoins, si une telle solution permet de limiter l'élévation de température du transducteur électromagnétique, elle n'est pas totalement satisfaisante, puisque la dissipation thermique est obtenue par le boîtier. De ce fait, la chaleur dissipée par le boîtier se fait en partie au contact de l'utilisateur qui reste donc soumis à un échauffement relativement important malgré l'optimisation de la dissipation thermique. Ainsi, il n'existe pas, à l'heure actuelle, de transducteur électromagnétique pour un système de stimulation, tel qu'un dispositif de massage, qui soit exempt d'un tel problème de soumission de l'utilisateur à la chaleur dégagée par l'électro-aimant lors de son activation tout en assurant une fiabilité accrue du transducteur électromagnétique.

En outre, le document FR 2 627 693 A1 dévoile un transducteur électromécanique pour transmettre un stimulus vibratoire à un utilisateur, le transducteur électromécanique comprenant un boîtier présentant une face d'appui, un élément mobile monté mobile en translation dans le boîtier au moyen d'au moins un premier élément de rappel élastique, un système d'actionnement électromagnétique configuré pour mettre en mouvement l'élément mobile, le système d'actionnement comprenant un électro-aimant et au moins un premier aimant, l'électro-aimant étant solidaire de l'élément mobile et l'aimant étant solidaire du boîtier, le premier élément de rappel élastique comprenant un matériau isolant thermique, et le transducteur électromécanique comprenant en outre un élément thermosensible associé à l'électro-aimant.

### Exposé de l'invention

Ainsi, l'invention a pour objet de résoudre le problème ci-dessus et vise la fourniture d'un transducteur électromagnétique autorisant la fourniture d'une protection de l'utilisateur vis-à-vis de la chaleur émise par l'électro-aimant, et en particulier sa bobine, et de même qu'une protection thermique du transducteur électromagnétique pendant son activation assurant ainsi une fiabilité accrue du transducteur électromagnétique.

L'invention concerne à cet effet, un transducteur électromécanique pour transmettre un stimulus vibratoire à un utilisateur comprenant les caractéristiques de la revendication 1. Le transducteur électromécanique est destiné à être logé dans une garniture d'un système de stimulation avec une face d'appui affleurant ladite garniture pour transmettre le stimulus à un utilisateur dudit système de stimulation, le transducteur électromécanique comprenant :
- un boîtier présentant la face d'appui,
- un élément mobile monté mobile en translation dans le boîtier au moyen d'au moins un premier élément de rappel élastique,
- un système d'actionnement électromagnétique, configuré pour mettre en mouvement l'élément mobile, le système d'actionnement comprenant un électro-aimant et au moins un premier aimant.

L'électro-aimant est solidaire de l'élément mobile et l'aimant est solidaire du boîtier.

Le premier élément de rappel élastique comprend un matériau isolant thermique, et le transducteur électromécanique comprend en outre un élément thermosensible associé à l'électro-aimant.

Avec une telle configuration, l'électro-aimant étant solidaire de l'élément mobile et l'élément mobile étant lui-même isolé thermiquement du boîtier par le premier élément de rappel élastique, la chaleur évacuée vers l'utilisateur est ainsi réduite.

De plus, le fait de prévoir un élément thermosensible associé à l'électro-aimant autorise à la fois une protection de l'utilisateur et un bon fonctionnement du transducteur. En effet, un tel élément thermosensible autorise une limitation, voire une coupure, du courant transmis à l'électro-aimant en cas d'échauffement de l'électro-aimant dont pourrait résulter une élévation en température du boîtier potentiellement gênante pour l'utilisateur ou engendrer un disfonctionnement du transducteur.

Ainsi avec une telle combinaison d'isolation thermique et de protection thermique autorisée par l'élément thermosensible, il est possible de protéger l'utilisateur de la gêne que pourrait engendrer la chaleur émise par l'électro-aimant du transducteur électromagnétique pendant son activation.

On notera, de plus, avec une telle configuration dans laquelle l'électroaimant est solidaire de l'élément mobile, on évite les risques d'endommagement de l'électroaimant par l'élément mobile lors de ses déplacements. Il en résulte donc une fiabilité accrue vis-à-vis des transducteurs électromagnétiques de l'art antérieur pour lesquels l'électroaimant est agencé solidaire au boîtier et qui présente, de ce fait, un risque d'endommagement lors des déplacements de l'élément mobile.

Par garniture du système de stimulation il doit être entendu ci-dessus et dans le reste de ce document le matériau constituant au moins une partie interne du système de stimulation, telle qu'une mousse d'un fauteuil ou d'une table de massage, lorsque de le système de stimulation est un fauteuil ou une table de massage, le matériau constituant un mur, lorsque de le système de stimulation est un mur équipé de transducteurs selon l'invention. Bien entendu, une telle garniture peut être ou non associée à un habillage, tel qu'un tissu ou un habillage de cuir d'un fauteuil, ou encore un papier peint d'un mur.

On entend ci-dessus et dans le reste de ce document par « isolant thermique », un matériau présentant une conductivité thermique inférieure à 1 W.m⁻¹.K⁻¹.

Le boîtier peut comprendre un capot présentant la face d'appui et un corps fermé par ledit capot, l'élément mobile étant monté mobile vis-à-vis du corps.

Le capot peut comprendre au moins une partie mobile vis-à-vis du corps.

La partie mobile du capot peut être reliée au corps au moyen d'un deuxième élément de rappel élastique, l'ensemble partie mobile du capot et deuxième élément de rappel élastique présentant une fréquence de résonnance supérieure à une fréquence de résonnance de l'ensemble élément mobile et premier élément de rappel élastique.

On notera qu'un tel deuxième élément de rappel élastique peut être fourni par une partie périphérique du capot qui est amincie ou/et spécialement formée vis-à-vis de la partie mobile qui est centrale.

En variante à cette possibilité, le deuxième élément de rappel élastique peut être un élément distinct de la partie mobile.

Dans une telle configuration, le capot est à même de se déplacer en étant entraîné par le déplacement de l'élément mobile et/ou le les variations de flux magnétique générées par l'électroaimant.

Ainsi, un tel deuxième élément de rappel élastique permet à l'élément mobile et la partie mobile du capot de présenter des fréquences de résonnance différentes permettant ainsi au transducteur de présenter une bande passante plus importante quant à la fréquence de mouvement transmissible à l'utilisateur
Avec une l'une ou l'autre de ces configurations, le capot est apte à participer à la transmission du mouvement de l'élément mobile afin de produire un stimulus vibratoire pouvant être utilisé selon les cas d'usage cités en préambule.

Le transducteur électromécanique peut comprendre en outre un capteur de déplacement agencé dans le boîtier et configuré pour fournir un signal relatif au déplacement dudit boîtier.

Un tel capteur de déplacement permet de fournir des informations concernant à la fois l'orientation du boîtier et l'amplitude du mouvement transmis à l'utilisateur. Ces informations peuvent ensuite être utilisées pour optimiser la simulation d'acte de massage appliqué à l'utilisateur.

Un tel capteur de déplacement peut être un capteur de déplacement en tant que tel, tel qu'un capteur capacitif ou un capteur permettant d'indexer un déplacement, un capteur de changement d'orientation, tel qu'un gyromètre ou un gyroscope, ou encore un accéléromètre, voire une combinaison de plusieurs capteurs.

Le capteur de déplacement peut être solidaire du capot.

De cette manière, le capteur de déplacement est à même de transmettre des informations sur le mouvement du capot.

L'élément thermosensible est sélectionné parmi les interrupteurs thermo-commandés, préférentiellement auto-réarmables, et les capteurs de température.

De tels éléments thermosensibles sont particulièrement adaptés pour permettre de limiter, voire supprimer, l'alimentation de l'électro-aimant.

L'élément thermosensible peut être associé à une température seuil à partir de laquelle l'alimentation de l'électro-aimant est limitée voire supprimée.

L'élément mobile peut comprendre un noyau de l'électro-aimant, ledit noyau comprenant au moins une forme creuse telle qu'une forme tubulaire.

Un tel noyau de forme creuse permet d'optimiser les performances de l'électro-aimant avec une limitation les phénomènes de courant de Foucault qui pourraient les perturber. Le noyau peut comporter un enroulement d'au moins une feuille en matériau ferreux, deux enroulements successifs étant séparés l'un de l'autre par un matériau diélectrique. Un tel enroulement est particulièrement adapté pour limiter les phénomènes de courant de Foucault.

Le boîtier peut comporter au niveau de la face d'appui un élément d'interface comprenant au moins un élastomère, ledit élément d'interface étant destiné à venir en appui, au travers d'un éventuel habillage, de l'utilisateur pour lui transmettre le stimulus vibratoire à l'utilisateur.

Ledit élastomère peut être un silicone ou un caoutchouc nature ou un caoutchouc synthétique.

Un tel élément d'interface fourni une couche isolante thermiquement au niveau de la face d'appui limitant la transmission de chaleur du boîtier vers l'utilisateur. Le confort de l'utilisateur en est ainsi préservé.

On notera, de plus, qu'un tel élément d'interface peut également limiter la transmission des fréquences sonores audibles que pourrait générer le déplacement de l'élément mobile et/ou une éventuelle partie mobile du capot.

L'élément d'interface peut comprendre une pluralité de cavités.

De telles cavités permettent de conférer à l'élément d'interface un amorti et une isolation thermique supplémentaire vis-à-vis d'un élément d'interface dépourvue de telles cavités. Le boîtier comportant un corps et un capot qui présente la face d'appui, le corps peut comprendre des ouvertures sur une face opposée au capot.

De telles ouvertures, ou évents, permettent une communication fluidique entre le logement formé par le boîtier et l'extérieur du boîtier autorisant ainsi l'évacuation d'une partie de l'énergie thermique générée par l'électro-aimant.

L'invention concerne en outre un système de stimulation destiné à fournir des stimuli vibratoires à un utilisateur comprenant une garniture et au moins un transducteur électromécanique selon l'invention, ledit au moins un transducteur étant logé dans la garniture avec une face d'appui affleurant ladite garniture.

Un tel système de stimulation bénéficie des avantages liés au transducteur électromécanique dont il est pourvu.

L'élément thermosensible du ou de chaque transducteur électromécanique peut être un capteur de température et le système de stimulation peut comprendre en outre au moins une unité de commande du ou des transducteurs électromécaniques configurée pour alimenter l'électro-aimant du ou des transducteurs électromécaniques, l'unité de commande étant en outre configurée pour récupérer un signal de température fourni par le ou les capteurs de température et pour, lorsqu'un ou plusieurs signaux de température fournis par le ou les capteurs de température correspondent à une température supérieure ou égale, voire strictement supérieure, à une température seuil, limiter, voire arrêter, l'alimentation du ou des électro-aimants pour lequel les signaux de température fournis par le ou les capteurs de température correspondant à une température supérieure ou égale à la température seuil.

Une telle configuration du système de stimulation autorise une adaptation de l'alimentation de l'électro-aimant en cas de surchauffe. On évite ainsi tout risque de désagréments pour l'utilisateur même en cas de sollicitation significative du transducteur électromagnétique.

Le système de stimulation peut-être un siège de véhicule, ledit siège étant préférentiellement un siège destiné à équiper un aéronef.

Un tel système de stimulation bénéficie plus particulièrement des avantages de l'invention.

L'invention concerne en outre un véhicule comprenant un système de stimulation selon l'invention.

Un tel véhicule permet d'offrir à ces passagers les avantages liés au système de stimulation qui l'équipe.

### Brève description des dessins

La présente invention sera mieux comprise à la lecture de la description d'exemples de réalisation, donnés à titre purement indicatif et nullement limitatif, en faisant référence aux dessins annexés sur lesquels :
[Fig.1] illustre un système de stimulation, ici un fauteuil de massage pour un aéronef, selon l'invention équipé de quatre transducteurs électromagnétiques selon l'invention.
[Fig.2] illustre une vue en section schématique d'un transducteur électromagnétique selon un premier mode de réalisation dans lequel un capot d'un boîtier dudit transducteur est solidaire d'un corps de ce même boîtier.
[Fig.3] illustre une vue en section schématique d'un transducteur électromagnétique selon un deuxième mode de réalisation dans lequel le capot du boîtier du transducteur est monté mobile en translation vis-à-vis du corps du boîtier.
[Fig.4] illustre une vue en section schématique d'un transducteur électromagnétique selon un troisième mode de réalisation dans lequel le capot comprend une partie centrale mobile vis-à-vis du corps ceci au moyen au moyen d'un élément de rappel élastique.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et pouvant se combiner entre elles.

### Description des modes de réalisation

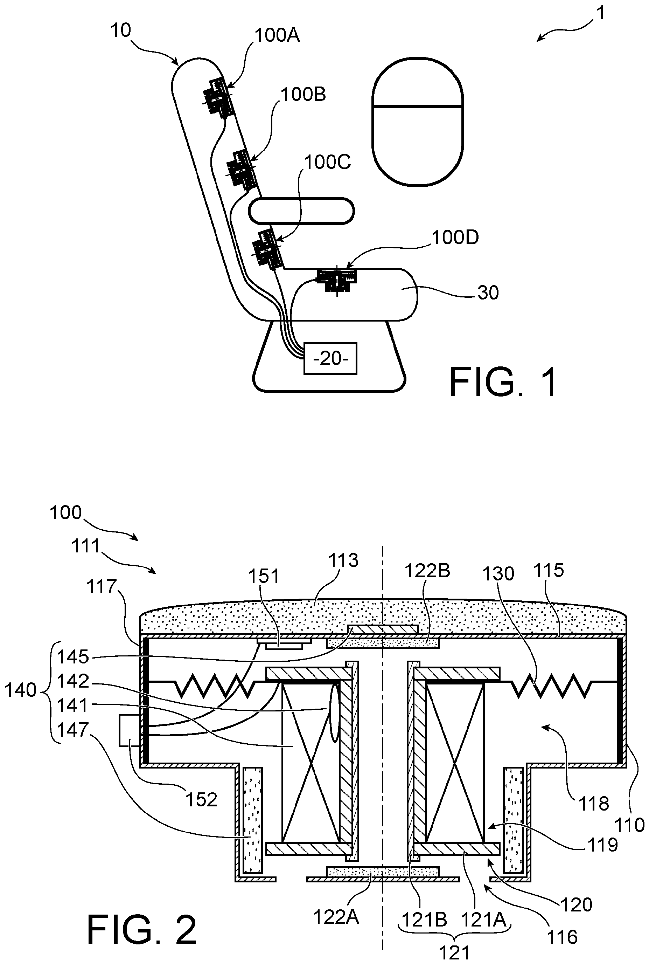

La figure 1 illustre, selon une vue schématique, un fauteuil d'aéronef, en tant que système de stimulation 10, comprenant quatre transducteurs électromagnétiques 100A, 100B, 100C, 100D logés dans une garniture 30 du fauteuil d'aéronef, ledit fauteuil étant installé dans un aéronef 1.

On notera que bien entendu, si dans le présent exemple, le système de stimulation 10 est un fauteuil d'aéronef, l'invention ne se limite, bien entendu, pas à cette seule application et concerne tout type de systèmes de stimulation 10 destiné à transmettre des stimuli vibratoires et qui est susceptible de comporter de tel transducteurs électromagnétiques 100A, 100B, 100C, 100D. Ainsi, selon des possibilités non illustrées et non limitatives, le système de stimulation 10 peut également être un fauteuil de véhicule motorisé terrestre ou marin, un fauteuil de bureau ou encore un lit ou une table de massage, équipés desdits transducteurs électromagnétiques pour fournir, au moyen de la transmission de stimuli vibratoires fournis par les transducteurs électromagnétiques, un massage ou un signal sensitif à l'utilisateur dudit système de stimulation, ceci sans que l'on sorte du cadre de l'invention.

De plus, si de tels transducteurs visent en particulier l'admission de massage à des usagers desdits systèmes de stimulation 10, d'autres applications sont parfaitement envisageables, sans que l'on sorte du cadre de l'invention. En particulier, de tels transducteurs peuvent être utilisés dans le cadre de divertissements de l'utilisateur, tels que des activités de jeux vidéo ou de consommation de contenues multimédia, les transducteurs étant à même d'appliquer des stimulations infrason ou basses fréquences en lien avec lesdites activités. Selon une autre possibilité d'application de l'invention, de tels transducteurs peuvent être utilisés pour transmettre une information à l'utilisateur dudit système de stimulation 10, telle que, par exemple et dans le cadre d'une application à un fauteuil de pilote d'aéronef, un retour de force concernant des commandes de pilotage ou des informations de vol.

De même, si de tels systèmes de stimulation sont généralement des meubles, voire des fauteuils, d'autres types de systèmes de stimulation peuvent être envisagés sans que l'on sorte du cadre de l'invention. Ainsi un tel système de stimulation 10 peut être un mur ou un planché, incluant dans leur garniture 30 (c'est-à-dire leur matériau interne dudit mur ou planché), un transducteur électromagnétique 100A, 100B, 100C, 100D pour transmettre un stimulus vibratoire à l'utilisateur lorsqu'il rentre en contact avec une partie dudit mur ou planché équipée par ledit transducteur électromagnétique 100A, 100B, 100C, 100D.

On notera que la figure 1 montre, outre les quatre transducteurs électromagnétiques 100A, 100B, 100C, 100D qui sont intégrés à la garniture 30 du fauteuil, une unité de commande 20 desdits transducteurs apte à fournir un signal de commande auxdits transducteurs électromagnétiques 100A, 100B, 100C. Une telle configuration de l'unité de commande 20 est bien entendu qu'un exemple, d'autres configurations sont parfaitement envisageables sans que l'on sorte du cadre de l'invention, l'unité de commande 20 pouvant par exemple être intégrée à une unité de commande centralisée d'un véhicule ou encore fournie en deux partie, une sous-unité respective intégrée à chaque transducteur électromagnétique 100A, 100B, 100C, 100D et une unité centrale connectée auxdites sous-unité de commande.

De même la configuration de transducteurs électromagnétiques 100A, 100B, 100C, 100D illustrée sur la figure 1 est donnée qu'à titre d'exemple et n'est nullement limitative. Ainsi, si le fauteuil comprend un nombre de quatre transducteurs électromagnétiques 100A, 100B, 100C, 100D avec une répartition le long du dossier et de l'assise, il est parfaitement envisageable de les répartir autrement. Par exemple, les transducteurs électromagnétiques 100A, 100B, 100C, 100D peuvent être agencés par paires réparties de part et d'autre d'un axe de symétrie du fauteuil avec une répartition similaire le long du dossier et de l'assise (c'est-à-dire une configuration à 8 transducteurs électromagnétiques), ou encore un transducteur électromagnétique 100A, 100B, 100C, 100D de grande taille pour l'assise et 6 transducteurs électromagnétiques 100A, 100B, 100C, 100D de plus petite taille pour le dossier.

Dans le cadre d'un premier mode de réalisation et comme illustré sur la figure 2, le transducteur électromagnétique 100 comprend :
- un boîtier 110 présentant la face d'appui 111,
- un élément mobile 120 logé dans le boîtier 110 et monté dans le boîtier 110 mobile en translation au moyen d'au moins un premier élément de rappel élastique 130 réalisé dans un matériau isolant thermique, et,
- un système d'actionnement électromagnétique 140, configuré pour mettre en mouvement l'élément mobile, le système d'actionnement comprenant un électro-aimant 141 et un premier aimant 145, l'électro-aimant 141 incluant un élément thermosensible 142.

Conformément à l'invention, l'électro-aimant 141 est solidaire de l'élément mobile 120 et le premier aimant 125 est solidaire du boîtier 110.

Dans le présent mode de réalisation, le boîtier 110 comprend un capot 115 présentant la face d'appui 111 et un corps 117 fermé par ledit capot 115, le capot 115 étant solidaire du corps 117.

Le corps 117 présente un logement principal 118, délimité en partie par le capot 115 et un logement secondaire 119, à l'opposé du capot 115. Conformément à la figure 2, le logement principal 118 et Le logement secondaire 119 présentent chacun une forme cylindrique de révolution et sont en communication l'un avec l'autre au niveau d'une base commune ouverte qui est, pour le logement principal, à l'opposé du capot 115. Bien entendu, d'autre forme du corps 117 est parfaitement envisageable sans que l'on sorte du cadre de l'invention.

De manière préférentielle, le corps 117 et le capot 115 sont réalisés dans un matériau ferromagnétique.

Selon une possibilité de l'invention, reprise dans le présent mode de réalisation, le corps peut comprendre des ouvertures 116, ou évents, sur une face opposée au capot. De telles ouvertures 116 permettent une communication fluidique entre le logement secondaire 119 et l'extérieur du corps et autorisent ainsi l'évacuation d'une partie de l'énergie thermique générée par l'électro-aimant 141 lors du fonctionnement du transducteur électromagnétique 100.

On notera, que dans le cadre d'une application de l'invention dans laquelle le système de stimulation 10 équipe un aéronef, les ouvertures 116 peuvent être choisies avec une taille réduite ou avec un maillage métallique afin de fournir un blindage électromagnétique et ainsi éviter une émission en dehors du boîtier 110 des éventuelles perturbations électromagnétiques que le système d'actionnement électromagnétique 140 pourrait générer. En conformité avec une telle application, le corps 117 et le capot 115 peuvent être tout deux réalisés dans des matériaux conducteurs électriques.

Dans le cadre du ce premier mode réalisation, l'élément mobile 120 comprend : - l'électro-aimant 141, comprenant une bobine en matériau conducteur électrique, tel que du cuivre, et incluant l'élément thermosensible 142, et - un noyau 121 en matériau ferromagnétique de l'électro-aimant 141.

Ainsi, dans la présente divulgation, par simplification et abus de langage, l'électro-aimant 141 est référencé uniquement par sa bobine, le noyau 121 étant décrit de manière indépendante du reste de l'électro-aimant 141.

Comme montré sur la figure 1, le noyau 121 présente une forme de cylindre de révolution creux et à base ouverte pouvant également être définie comme tubulaire, les bases dudit cylindre présentant des extensions radiales de manière à définir le long de sa paroi latérale un logement pour la bobine de l'électro-aimant 141.

Selon une possibilité de l'invention, conforme au présent mode de réalisation, le noyau 121 peut se présenter en deux parties, un cylindre extérieur 121A, présentant les extensions radiales et, un cylindre intérieur 121B inscrit à l'intérieur du cylindre extérieur. Selon cette possibilité et afin de limiter les courants de Foucaults, les cylindres extérieur et intérieur 121A, 121B du noyau sont isolés électriquement l'un de l'autre au moyen, par exemple, d'une couche de matériau diélectrique disposée entre eux. On notera que dans l'exemple de réalisation de ce premier mode de réalisation, le maintien entre le cylindre extérieur 121A et le cylindre intérieur 121B est réalisé par un sertissage au niveau de la base du cylindre intérieur 121B. D'autres systèmes de maintien, tel qu'un montage en force, sont également envisageables sans que l'on sorte du cadre de l'invention.

En variante et selon une configuration avantageuse non illustrée, le noyau 121 peut comprendre un enroulement d'au moins une feuille en matériau ferreux, deux enroulements successifs étant séparés l'un de l'autre par un matériau diélectrique. Un tel enroulement peut, par exemple, être formé par l'enroulement d'une seule feuille en matériau ferreux revêtue du matériau diélectrique tel qu'un vernis. Selon cette même variante, en conformité à la possibilité de ce premier mode de réalisation selon laquelle le noyau 121 peut être en deux parties, au moins l'un du cylindre extérieur 121A et du cylindre intérieur 121B peut comprendre un tel enroulement.

On notera également que, si dans le présent mode de réalisation, l'élément mobile 120 comprend uniquement la bobine de l'électro-aimant 141 et le noyau 121, il est également envisageable, sans que l'on sorte du cadre de l'invention que l'élément mobile 120 comprend un insert en matériau amagnétique, cet insert venant s'insérer dans le noyau afin d'augmenter la masse de l'élément mobile 120. De la même façon, il est envisageable sans que l'on sorte du cadre de l'invention, que l'élément mobile, et donc l'électro-aimant 141, soit exempt de noyau 121.

L'élément thermosensible 142 est, dans le présent mode de réalisation, associé à l'électro-aimant 141 en étant positionné entre la bobine de l'électro-aimant 141 et le noyau 121ou seulement dans la bobine pour prévenir un échauffement excessif du fil de la bobine de l'électro-aimant. Une telle association permet à l'élément thermosensible 142 d'être soumis aux variations de température de l'électro-aimant 141. Bien entendu, d'autre agencement/ association entre l'élément thermosensible 142 et l'électro-aimant 141 sont envisageables sans que l'on sorte du cadre de l'invention. Ainsi, par exemple, dans le cas où l'élément thermosensible 142 est un capteur de température à distance, tel qu'un capteur de température par infrarouge, l'élément thermosensible 142 peut être agencé sur la paroi du boîtier 110 en regard de l'électro-aimant 141 de manière à permette une mesure de la température de l'électro-aimant 141.

Selon une possibilité de l'invention reprise dans le présent mode de réalisation, l'élément thermosensible 142 peut être un capteur de température relié à l'unité de commande 20 et associé à une température seuil à partir duquel l'unité de commande réduit, voire supprime, l'alimentation de l'électro-aimant 141 et ainsi en réduire l'énergie thermique dégagé par ce dernier. Ainsi, l'unité de commande 20 est configurée pour récupérer le signal de température fourni par l'élément thermosensible et pour, lorsque le signal fourni par l'élément thermosensible correspond à une température supérieure ou égale, voire strictement supérieure, à la température seuil, limiter, voire arrêter, l'alimentation de l'électro-aimant 141.

Selon cette même possibilité, le capteur de température peut être associé à deux température seuil, une première température seuil relativement basse, par exemple, inférieur ou égale à 50°C voire 60°C, à partir de laquelle l'alimentation de l'électroaimant 141 est limitée, et une deuxième température seuil relativement haute, par exemple supérieure ou égale à 80°C voire à 100°C, à partir de laquelle l'alimentation de l'électroaimant 141 est arrêtée, celle-ci ne reprenant, que de manière limité, lorsque la température passe une troisième température seuil intermédiaire auxdits première et deuxième températures seuil.

Selon une autre possibilité, non illustrée, l'élément thermosensible 142 peut être un interrupteur thermo-commandé, préférentiellement auto-réarmable, tel qu'un fusible thermique auto-réarmable également connu sous la dénomination anglaise « polyswitch fuse ». Selon cette autre possibilité, l'élément thermosensible 142 est agencé en série avec l'électro-aimant de telle manière que l'alimentation de l'électro-aimant soit stoppée lorsque le fusible thermique atteint une température seuil.

Quelle que soit la configuration de l'élément thermosensible 142 sélectionnée, la température seuil à laquelle est associé l'élément thermosensible est préférentiellement inférieure ou égale à 100°C, voire inférieure ou égale à 70°C ou encore inférieure ou égale à 60°C.

On notera que ladite température seuil peut être sélectionnée en fonction du type de protection attendu. En effet, une température de 100°C est particulièrement adaptée pour une protection de l'électroaimant 141 et notamment du matériau diélectrique utilisé pour le bobinage de la bobine de l'électroaimant 141 alors qu'une température de 60°C est plus adaptée lorsque l'on cherche à préserver au mieux le confort de l'utilisateur (une température de 100°C est néanmoins acceptable notamment en raison de l'utilisation d'un élément d'interface 113, tel que cela est discuté ci-après).

Afin de permettre la mise en déplacement de l'électro-aimant 141 et donc de l'élément mobile vis-à-vis du boîtier 110, le premier aimant 145 peut être agencé sur une face du capot 115, dans le présent mode de réalisation, la face d'appui 111, en étant solidaire de ce dernier, ou sur l'une des faces du boîtier 110 qui est opposée au capot 115.

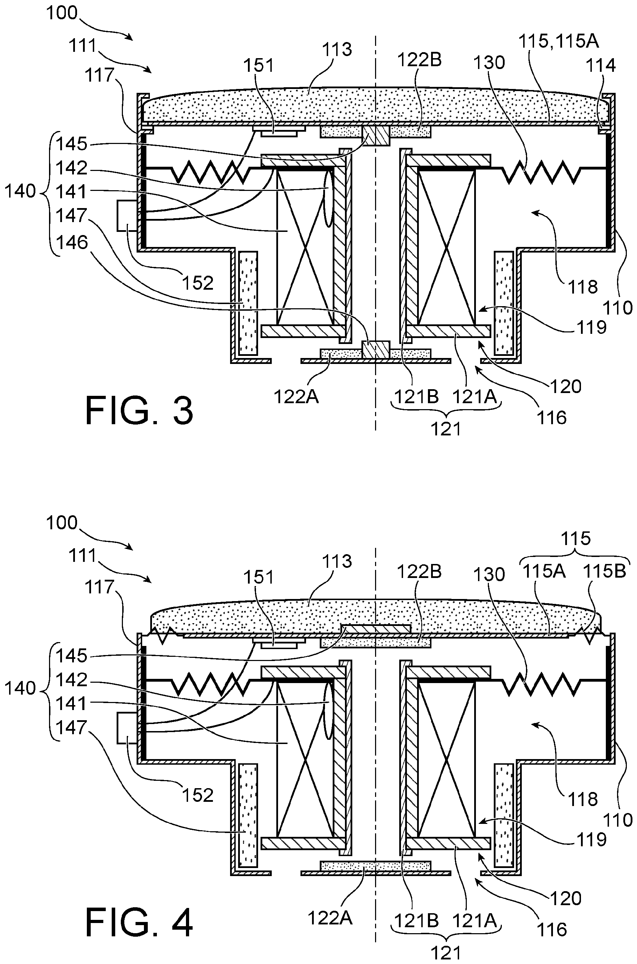

On notera, que bien entendu, si dans le présent mode de réalisation, le premier aimant 145 est agencé sur une face externe du capot 115, il est également envisageable, sans que l'on sorte du cadre de l'invention que le premier aimant soit agencé sur une face interne dudit capot comme cela est décrit ci-après dans le cadre du deuxième mode de réalisation et illustré sur la figure 3. De même, lorsque l'aimant est agencé sur l'une des faces du boitier 110, opposée au capot, cette face peut aussi bien être une face externe qu'une face interne dudit boîtier 110.

Selon une autre variante qui sera également décrite dans le cadre du deuxième mode de réalisation, le système d'actionnement électromagnétique 140 peut comporter, outre le premier aimant 145, un deuxième aimant 146 solidaire de l'un parmi une face du capot 115 et l'une des faces du boîtier 110 qui est opposée au capot 115, comme cela est montré sur la figure 3, le premier aimant 145 étant solidaire d'un autre parmi une face du capot 115 et l'une des faces du boîtier 110 qui est opposée au capot 115. Avec une telle variante, on obtient une efficacité renforcée du système d'actionnement électromagnétique 140 et il est possible d'utiliser des premiers et deuxièmes aimants 145, 146 avec un dimensionnement réduit.

Comme montré sur la figure 2, l'élément mobile 120 est logé pour partie dans le logement principal 118 et pour partie dans le logement secondaire 119.

Afin de guider l'élément mobile 120 pendant sa translation, le logement secondaire 119 peut être équipé d'éléments de guidage 147, tel qu'un palier glissant, le long duquel une partie de l'élément mobile 120, ici une extension radiale du noyau 121 coulisse pendant le déplacement en translation de l'élément mobile 120. De tels paliers glissant peuvent être fournis par un polyamide, tel qu'un Nylon, ou par un Polyoxyméthylène, également connu sous le sigle POM.

L'élément mobile 120 est relié aux parois du logement principal 118 au moyen du premier élément de rappel élastique 130. Le premier élément de rappel élastique 130 comprend au moins un matériau isolant thermique afin de limiter la transmission d'énergie thermique de l'élément mobile 120 (pour être plus précis de l'électro-aimant 141) vers le boîtier 110. Ce même matériau isolant est également préférentiellement amagnétique, afin d'éviter toute interférence avec le système d'actionnement électromagnétique140et plus précisément ne pas court-circuiter le flux magnétique du noyau entre électro-aimant 141 et le premier aimant 145qui produit l'effet d'attraction-répulsion.

Ainsi, le premier élément de rappel élastique 130 peut, par exemple, comprendre une résine, tel qu'une résine de poly(méthacrylate de méthyle), seule ou imprégnant un support fibreux ou tissu.

Conformément au présent mode de réalisation, le boîtier 110 peut comprendre au moins un amortisseur 122A, 122B disposé pour s'interposer entre le boîtier et l'élément mobile lors d'un éventuel déplacement extrémal. Ainsi, comme illustré sur la figure 2, le boîtier 110 peut comprendre un premier et un deuxième amortisseur 122A, 122B, le premier amortisseur 122A sur une face interne capot 115 en regard de l'élément mobile 120, et le deuxième amortisseur 122B, sur une face interne du corps 117 à l'opposé de la face interne du capot 115.

Ainsi, l'amortisseur 122A, 122B peut comprendre un élastomère, tel qu'un silicone ou un caoutchouc (naturel ou synthétique).

L'élément mobile 120, le premier élément de rappel élastique 130 et le ou les amortisseurs 122A, 122B peuvent être configurés pour que l'élément mobile 120 présente une fréquence de résonnance comprise entre 1 et 100 Hz, voire entre 5 et 50 Hz et préférentiellement entre 10 et 30 Hz.

Afin de fournir une isolation thermique supplémentaire, le boîtier 110 peut comporter, comme illustré sur la figure 2, au niveau de la face d'appui 111 l'élément d'interface 113 comprenant au moins un élastomère, ledit élément d'interface 113 étant destiné à venir en appui, au travers d'un éventuel habillage, de l'utilisateur pour lui transmettre le mouvement de l'élément mobile 120.

Selon une possibilité non illustrée, l'élément d'interface peut comprendre une pluralité de cavités. De telles cavités permettent de conférer à l'élément d'interface un amorti et une isolation thermique supplémentaire vis-à-vis d'un élément d'interface dépourvu de telles cavités.

On notera également, qu'afin de déterminer l'orientation du transducteur électromagnétique 100 et/ou déterminer l'intensité des déplacements de l'élément mobile, le transducteur électromagnétique peut comprendre un capteur de déplacement 143 agencé dans le boîtier et configuré pour fournir un signal relatif au déplacement du boîtier. Le capteur de déplacement peut ainsi être sélectionné dans le groupe comprenant les accéléromètres, les gyromètres et les gyroscopes.

Comme illustré sur la figure 1 le capteur de déplacement 151 peut être, par exemple, agencé solidaire du capot 115 ou encore, selon une possibilité non illustrée, solidaire au corps 117.

Avec un tel équipement du transducteur électromagnétique 100, l'unité de commande 20 est à même de déterminer des informations concernant le transducteur électromagnétique 100 et le système de stimulation 10, telles que l'orientation du système de stimulation 10, l'installation d'un nouvel utilisateur sur ledit système de stimulation 10, une estimation de la corpulence dudit utilisateur, et ainsi adapter le monde de fonctionnement du ou de chaque transducteurs électromagnétiques en fonction des informations déterminées. Ces mêmes informations peuvent également être utilisées afin de régler certains paramètres environnementaux du système de stimulation 10, tels que l'orientation d'une ou plusieurs lumières, d'un flux d'air ou d'un équipement tel qu'un écran.

Dans le présent mode de réalisation, le capteur de déplacement 151 et l'élément thermosensible 142 sont tous deux reliés à un connecteur 152 traversant le boîtier 110 afin de permettre la connexion à l'unité de commande 20. Ce même connecteur 152 est également utilisé pour connecter l'électro-aimant 141 à l'unité de commande afin d'autoriser son alimentation par cette dernière.

La figure 3 illustre un transducteur électromagnétique 100 selon un deuxième mode de réalisation dans lequel capot 115 comprend au moins une partie mobile 115A vis-à-vis du corps 117, de telle manière que le déplacement de l'élément mobile 120 entraîne ladite partie mobile 115A du capot 115 en déplacement.

Un transducteur électromagnétique 100 selon ce deuxième mode de réalisation se différencie d'un transducteur électromagnétique 100 selon le premier mode en ce que le capot 115 est mobile vis-à-vis du corps 117 du boîtier 110,en ce que le premier aimant 145 est agencé sur une face interne du capot 115 logé dans l'amortisseur 122B et en ce qu'il est prévu un deuxième aimant 146 agencé sur une face interne du corps 117 logé dans l'amortisseur 122A.

Ainsi, selon ce deuxième mode de réalisation, le capot 115 est agencé mobile en translation vis-à-vis du corps 117 du boîtier 110, de telle manière que le déplacement de l'élément mobile entraîne le capot 115 en déplacement. Pour se faire, le corps peut comporter, comme illustré sur la figure 3, des butées, à même de délimiter l'amplitude de déplacement du capot 115 vis-à-vis du corps 117. Selon cette possibilité, il est également possible, comme montré sur la figure 3, de prévoir un joint périphérique 114 s'interposant entre capot 115et l'une des butées (ici la butée inférieur), ceci afin de réduire, voire supprimer, l'émission de sonore que pourrait générer le déplacement du capot 115.

Le capot 115 peut être conformé, de telle manière à présenter une fréquence de résonnance comprise entre 50 et 150 Hz, préférentiellement entre 75 et 125 HZ. De cette manière, en ayant une fréquence de résonnance distincte de celle de l'élément mobile 120, en correspondance ou non à une harmonique de la fréquence de résonnance de l'élément mobile 120, le transducteur électromagnétique 100 est à même de fournir un stimulus vibratoire sur une plage de fréquence plus importante et ainsi faciliter la détente de l'utilisateur.

La figure 4 illustre un transducteur électromagnétique 100 selon un troisième mode de réalisation dans lequel capot 115 comprend un deuxième élément de rappel élastique 115B reliant la partie mobile 115A du capot 115 au corps 117.

Un transducteur électromagnétique 100 selon un troisième mode de réalisation se différencie d'un transducteur électromagnétique 100 selon le premier mode de réalisation en ce qu'il comprend le deuxième élément de rappel élastique 115B et en ce que une partie mobile 115A du capot se déplace vis-à-vis du corps 117 par déformation dudit deuxième élément de rappel élastique 115B.

Selon une première possibilité du présent mode de réalisation, comme cela est montré sur la figure 4, le deuxième élément de rappel élastique 115B et la partie mobile 115B peuvent être fournis sous la forme de deux pièces distinctes l'une de l'autre, l'une constituant le deuxième élément de rappel élastique et la partie mobile formant le capot en tant que tel. Selon cette possibilité, le deuxième élément élastique comprend un matériau ferromagnétique, tel que par exemple une charge en matériau ferreux d'une résine, afin d'assurer une continuité magnétique entre le corps 117 et la partie mobile 115B du capot 115.

En variante, selon une possibilité non illustrée, le capot 115 peut être formé d'une seule pièce présentant une épaisseur variable ou une forme adaptée avec une partie centrale, formant la partie mobile 115A, et une partie périphérique 115B, conformée par son épaisseur ou sa forme, pour former le deuxième élément de rappel élastique, par laquelle le capot 115 est relié au corps 111. Ainsi la partie périphérique 115B peut présenter une épaisseur relativement réduite et/ou une forme spécifique vis-à-vis de la partie mobile 115A. De cette manière, de par sa relative faible épaisseur et/ou sa forme, la partie périphérique présente une élasticité suffisante pour former le deuxième élément de rappel élastique 115B et la partie mobile 115A présente, de par son épaisseur relativement forte, une rigidité suffisante pour transmettre un mouvement à l'utilisateur.

## Revendications

1. Transducteur électromécanique (100, 100A, 100B, 100C, 100D) pour transmettre un stimulus vibratoire à un utilisateur, le transducteur électromécanique (100, 100A, 100B, 100C, 100D) étant destiné à être logé dans une garniture (30) d'un système de stimulation (10) avec une face d'appui (111) affleurant ladite garniture (30) pour transmettre le stimulus vibratoire à l'utilisateur dudit système de stimulation, le transducteur électromécanique (100, 100A, 100B, 100C, 100D) comprenant :
- un boîtier (110) présentant la face d'appui (111),
- un élément mobile (120) monté mobile en translation dans le boîtier (110) au moyen d'au moins un premier élément de rappel élastique (130),
- un système d'actionnement électromagnétique (140), configuré pour mettre en mouvement l'élément mobile (120), le système d'actionnement (140) comprenant un électro-aimant (141) et au moins un premier aimant (145),
l'électro-aimant (141) étant solidaire de l'élément mobile (120) et l'aimant (145) étant solidaire du boîtier (110),
le premier élément de rappel élastique (130) comprenant un matériau isolant thermique présentant une conductivité thermique inférieure à 1 Wm⁻¹K⁻¹, et
le transducteur électromécanique (100, 100A, 100B, 100C, 100D) comprenant en outre un élément thermosensible (142) associé à l'électro-aimant (141) et sélectionné parmi les interrupteurs thermo-commandés et les capteurs de température, l'élément thermosensible étant adapté pour permettre de limiter ou supprimer l'alimentation de l'électro-aimant.

2. Transducteur électromécanique (100, 100A, 100B, 100C, 100D) selon la revendication 1, dans lequel le boîtier (110) comprend un capot (115) présentant la face d'appui (111) et un corps (117) fermé par ledit capot (115), l'élément mobile (120) étant monté mobile en translation vis-à-vis du corps (117),
dans lequel le capot (115) comprend au moins une partie mobile (115A) vis-à-vis du corps (117).

3. Transducteur électromécanique (100, 100A, 100B, 100C, 100D) selon la revendication 2, dans lequel la partie mobile (115A) du capot (115) est reliée au corps (117) au moyen d'un deuxième élément de rappel élastique (115B), l'ensemble partie mobile (115B) du capot (115) et deuxième élément de rappel élastique (115B) présentant une fréquence de résonnance supérieure à une fréquence de résonnance de l'ensemble élément mobile (120) et premier élément de rappel élastique (130).

4. Transducteur électromécanique (100, 100A, 100B, 100C, 100D) selon l'une quelconque des revendications 1 à 3 comprenant en outre un capteur de déplacement (151) agencé dans le boîtier (110) et configuré pour fournir un signal relatif au déplacement du boîtier (110).

5. Transducteur électromécanique (100, 100A, 100B, 100C, 100D) selon l'une quelconque des revendications 1 à 4, dans lequel l'élément mobile (120) comprend un noyau (121) de l'électro-aimant (141), ledit noyau (121) comprenant au moins une forme creuse telle qu'une forme tubulaire.

6. Transducteur électromécanique (100, 100A, 100B, 100C, 100D) selon l'une quelconque des revendications 1 à 5, dans lequel le boîtier (110) comporte au niveau de la face d'appui (111) un élément d'interface (113) comprenant au moins un élastomère, ledit élément d'interface étant destiné à venir en appui, au travers d'un éventuel habillage du système de stimulation (10), de l'utilisateur pour lui transmettre le stimulus vibratoire à l'utilisateur.

7. Système de stimulation(10) destiné à fournir des stimuli vibratoire à un utilisateur et comprenant une garniture et au moins un transducteur électromécanique (100, 100A, 100B, 100C, 100D) selon l'une quelconque des revendications 1 à 6, ledit au moins un transducteur électromagnétique (100, 100A, 100B, 100C, 100D) étant logé dans la garniture (30) avec une face d'appui (111) affleurant ladite garniture (30).

8. Système de stimulation (10)selon la revendication 7, dans lequel l'élément thermosensible (142) de le ou chaque transducteur électromécanique (100, 100A, 100B, 100C, 100D) est un capteur de température et dans lequel le système de stimulation (10) comprend en outre au moins une unité de commande (20) du ou des transducteurs électromécaniques (100A, 100B, 100C, 100D) configurée pour alimenter l'électro-aimant (141) du ou des transducteurs électromécaniques (100A, 100B, 100C, 100D), l'unité de commande (20) étant en outre configurée pour récupérer un signal de température fourni par le ou les capteurs de température et pour, lorsqu'un ou plusieurs signaux de température fournis par le ou les capteurs de température correspondent à une température supérieure ou égale, voire strictement supérieure, à une température seuil, limiter, voire arrêter, l'alimentation du ou des électro-aimants (141) pour lequel le ou les signaux de température fournis par le ou les capteurs de température correspondent à une température supérieure ou égale à la température seuil.

9. Système de stimulation(10) selon la revendication 8, dans lequel le Système de stimulation (10) est un siège de véhicule, ledit siège étant préférentiellement un siège destiné à équiper un aéronef.

10. Véhicule (1) comprenant un système de stimulation selon l'une quelconque des revendications 7 à 9.

## Patentansprüche

1. Elektromechanischer Wandler (100, 100A, 100B, 100C, 100D) zum Übertragen eines Vibrationsreizes an einen Benutzer, wobei der elektromechanische Wandler (100, 100A, 100B, 100C, 100D) dazu bestimmt ist, in einem Verkleidungselement (30) eines Stimulationssystems (10) untergebracht zu werden, wobei eine Stützfläche (111) bündig mit dem Verkleidungselement (30) abschließt, um den Vibrationsreiz an den Benutzer des Stimulationssystems zu übertragen, wobei der elektromechanische Wandler (100, 100A, 100B, 100C, 100D) Folgendes umfasst:
- ein Gehäuse (110), der die Stützfläche (111) aufweist;
- ein bewegliches Element (120), das verschiebbar mittels mindestens eines ersten elastischen Rückstellelements (130) innerhalb des Gehäuses (110) montiert ist;
- ein elektromagnetisches Betätigungssystem (140), das dazu konfiguriert ist, das bewegliche Element (120) in Bewegung zu setzen, wobei das Betätigungssystem (140) einen Elektromagnet (141) und mindestens einen ersten Magnet (145) umfasst, wobei der Elektromagnet (141) fest mit dem beweglichen Element (120) verbunden ist und der Magnet (145) fest mit dem Gehäuse (110) verbunden ist,
wobei das erste elastische Rückstellelement (130) ein thermisch isolierendes Material umfasst, das eine Wärmeleitfähigkeit von weniger als 1 Wm⁻¹K⁻¹ aufweist, und
der elektromechanische Wandler (100, 100A, 100B, 100C, 100D) ferner ein wärmeempfindliches Element (142) umfasst, das mit dem Elektromagnet (141) verbunden ist und aus wärmegesteuerten Schaltern und Temperatursensoren ausgewählt wird, wobei das wärmeempfindliche Element dazu ausgelegt ist, zu ermöglichen, dass die Stromversorgung des Elektromagnets begrenzt oder unterbrochen wird.

2. Elektromechanischer Wandler (100, 100A, 100B, 100C, 100D) nach Anspruch 1, wobei das Gehäuse (110) eine Abdeckung (115) umfasst, das die Stützfläche (111) und einen durch die Abdeckung (115) verschlossenen Körper (117) aufweist, wobei das bewegliche Element (120) bezüglich des Körpers (117) verschiebbar montiert ist, wobei die Abdeckung (115) mindestens einen beweglichen Teil (115A) bezüglich des Körpers (117) umfasst.

3. Elektromechanischer Wandler (100, 100A, 100B, 100C, 100D) nach Anspruch 2, wobei der bewegliche Teil (115A) der Abdeckung (115) mittels eines zweiten elastischen Rückstellelements (115B) mit dem Körper (117) verbunden ist, wobei die Anordnung aus dem beweglichen Teil (115B) der Abdeckung (115) und dem zweiten elastischen Rückstellelement (115B) eine Resonanzfrequenz aufweist, die größer ist als eine Resonanzfrequenz der Anordnung aus dem beweglichen Element (120) und dem ersten elastischen Rückstellelement (130).

4. Elektromechanischer Wandler (100, 100A, 100B, 100C, 100D) nach einem der Ansprüche 1 bis 3, der ferner einen Verschiebungssensor (151) umfasst, der innerhalb des Gehäuses (110) angeordnet und dazu konfiguriert ist, ein Signal relativ zur Verschiebung des Gehäuses (110) bereitzustellen.

5. Elektromechanischer Wandler (100, 100A, 100B, 100C, 100D) nach einem der Ansprüche 1 bis 4, wobei das bewegliche Element (120) einen Kern (121) des Elektromagnets (141) umfasst, wobei der Kern (121) mindestens eine Hohlform, beispielsweise eine Röhrenform, umfasst.

6. Elektromechanischer Wandler (100, 100A, 100B, 100C, 100D) nach einem der Ansprüche 1 bis 5, wobei das Gehäuse (110) auf Höhe der Stützfläche (111) ein Schnittstellenelement (113) enthält, das mindestens ein Elastomer umfasst, wobei das Schnittstellenelement dazu bestimmt ist, durch eine mögliche Bekleidung des Stimulationssystems (10) am Benutzer anzuliegen, um den Vibrationsreiz an den Benutzer zu übertragen.

7. Stimulationssystem (10), das dazu bestimmt ist, einem Benutzer Vibrationsreize bereitzustellen, und ein Verkleidungselement und mindestens einen elektromechanischen Wandler (100, 100A, 100B, 100C, 100D) nach einem der Ansprüche 1 bis 6 umfasst, wobei der mindestens eine elektromagnetische Wandler (100, 100A, 100B, 100C, 100D) in dem Verkleidungselement (30) untergebracht ist, wobei eine Stützfläche (111) bündig mit dem Verkleidungselement (30) abschließt.

8. Stimulationssystem (10) nach Anspruch 7, wobei das wärmeempfindliche Element (142) des einen oder jedes elektromechanischen Wandlers (100, 100A, 100B, 100C, 100D) ein Temperatursensor ist und wobei das Stimulationssystem (10) ferner mindestens eine Steuereinheit (20) des oder der elektromechanischen Wandler (100A, 100B, 100C, 100D) umfasst, die dazu konfiguriert ist, den Elektromagnet (141) des oder der elektromechanischen Wandler (100A, 100B, 100C, 100D) mit Strom zu versorgen, wobei die Steuereinheit (20) ferner dazu konfiguriert ist, ein von dem oder den Temperatursensoren bereitgestelltes Temperatursignal abzurufen und, wenn ein oder mehrere von dem oder den Temperatursensoren bereitgestellte Temperatursignale einer Temperatur entsprechen, die größer oder gleich, oder sogar strikt größer als, eine Schwellentemperatur ist, um die Stromversorgung des oder der Elektromagneten (141) zu begrenzen oder sogar zu beenden, für die das oder die von dem oder den Temperatursensoren bereitgestellten Temperatursignale einer Temperatur entsprechen, die größer oder gleich der Schwellentemperatur ist.

9. Stimulationssystem (10) nach Anspruch 8, wobei das Stimulationssystem (10) ein Fahrzeugsitz ist, wobei der Sitz vorzugsweise ein Sitz ist, der dazu bestimmt ist, ein Flugzeug auszustatten.

10. Fahrzeug (1), das ein Stimulationssystem nach einem der Ansprüche 7 bis 9 umfasst.

## Claims

1. Electromechanical transducer (100, 100A, 100B, 100C, 100D) for transmitting a vibratory stimulus to a user, the electromechanical transducer (100, 100A, 100B, 100C, 100D) being intended to be housed in a lining (30) of a stimulation system (10) with an abutment face (111) fitting flush with said lining (30) to transmit the vibratory stimulus to the user of said stimulation system, the electromechanical transducer (100, 100A, 100B, 100C, 100D) comprising:
- a housing (110) having an abutment face (111),
- a movable element (120) mounted so as to be able to move in translation in the housing (110) by means of at least one first elastic return element (130),
- an electromagnetic actuation system (140) configured to set the movable element (120) in motion, the actuation system (140) comprising an electromagnet (141) and at least one first magnet (145),
the electromagnet (141) being secured to the movable element (120) and the magnet (145) being secured to the housing (110),
the first elastic return element (130) comprising a thermally insulating material having a thermal conductivity of less than 1 Wm⁻¹K⁻¹, and
the electromechanical transducer (100, 100A, 100B, 100C, 100D) furthermore comprising a thermosensitive element (142) associated with the electromagnet (141) and selected from thermocontrolled switches and temperature sensors, the thermosensitive element being adapted to make it possible to limit or suppress the supply to the electromagnet.

2. Electromechanical transducer (100, 100A, 100B, 100C, 100D) according to claim 1, wherein the housing (110) comprises a cover (115) having the abutment face (111) and a body (117) closed by said cover (115), the movable element (120) being mounted so as to be able to move in translation with respect to the body (117),
wherein the cover (115) comprises at least one part (115A) able to move with respect to the body (117).

3. Electromechanical transducer (100, 100A, 100B, 100C, 100D) according to claim 2, wherein the movable part (115A) of the cover (115) is connected to the body (117) by means of a second elastic return element (115B), the assembly consisting of the movable part (115B) of the cover (115) and the second elastic return element (115B) having a resonant frequency higher than a resonant frequency of the assembly consisting of the movable element (120) and the first elastic return element (130).

4. Electromechanical transducer (100, 100A, 100B, 100C, 100D) according to any one of claims 1 to 3, furthermore comprising a movement sensor (151) arranged in the housing (110) and configured to supply a signal relating to the movement of the housing (110).

5. Electromechanical transducer (100, 100A, 100B, 100C, 100D) according to any one of claims 1 to 4, wherein the movable element (120) comprises a core (121) of the electromagnet (141), said core (121) comprising at least one hollow shape such as a tubular shape.

6. Electromechanical transducer (100, 100A, 100B, 100C, 100D) according to any one of claims 1 to 5, wherein the housing (110) includes, at the abutment face (111), an interface element (113) comprising at least one elastomer, said interface element being intended to come into abutment, through any lining of the stimulation system (10), on the user to transmit thereto the vibratory stimulus to the user.

7. Stimulation system (10) intended to supply vibratory stimuli to a user and comprising a lining and at least one electromechanical transducer (100, 100A, 100B, 100C, 100D) according to any one of claims 1 to 6, said at least one electromagnetic transducer (100, 100A, 100B, 100C, 100D) being housed in the lining (30) with an abutment face (111) fitting flush with said lining (30).

8. Stimulation system (10) according to claim 7, wherein the thermosensitive element (142) of the or each electromechanical transducer (100, 100A, 100B, 100C, 100D) is a temperature sensor and wherein the stimulation system (10) furthermore comprises at least one unit (20) controlling the electromechanical transducer or transducers (100, 100A, 100B, 100C, 100D) configured to supply the electromagnet (141) of the electromechanical transducer or transducers (100, 100A, 100B, 100C, 100D), the control unit (20) being furthermore configured to recover a temperature signal supplied by the temperature sensor or sensors and, when one or more temperature signals supplied by the temperature sensor or sensors correspond to a temperature higher than or equal to, or even strictly higher than, a threshold temperature, to limit, or even to stop, the supply to the electromagnet or electromagnets (141) for which the temperature signal or signals supplied by the temperature sensor or sensors correspond to a temperature higher than or equal to the threshold temperature.

9. Stimulation system (10) according to claim 8, wherein the stimulation system (10) is a vehicle seat, said seat preferentially being a seat intended to equip an aircraft.

10. Vehicle (1) comprising a stimulation system according to any one of claims 7 to 9.
